# EUROPEAN PATENT SPECIFICATION

(11) **EP 4 198 210 B1**
(45) Date of publication and mention of the grant of the patent: **26.11.2025**
(21) Application number: 21872247.8
(22) Date of filing: 13.09.2021
(51) Int. Cl.: E02F 9/26, G06T 7/00, G06T 7/70

(54) **POSITION DETECTION SYSTEM**
POSITIONSERKENNUNGSSYSTEM
SYSTÈME DE DÉTECTION DE POSITION

(30) Priority: 25.09.2020 JP 2020161059
(43) Date of publication of application: 21.06.2023
(73) Proprietor: KOBELCO CONSTRUCTION MACHINERY CO., LTD., Hiroshima-shi, Hiroshima 731-5161 (JP)
(72) Inventor: FUJIWARA, Sho, Hiroshima-shi, Hiroshima 731-5161 (JP); HOSO, Yukihiro, Hiroshima-shi, Hiroshima 731-5161 (JP); KYU, Shingun, Hiroshima-shi, Hiroshima 731-5161 (JP)
(74) Representative: TBK
(86) International application number: PCT/JP2021/033596
(87) International publication number: WO 2022/065117

(56) References cited:
- EP-A1- 2 993 620
- JP-A- 2012 123 781
- JP-A- 2019 020 333
- JP-A- 2020 118 586
- JP-A- 2020 118 586
- JP-A- 2020 140 696

## Description

### Technical Field

The present invention relates to a position detection system that detects a position of a detection target with respect to a work machine.

### Background Art

As disclosed in Patent Literature 1, a captured image of a dropping target (dump truck or the like) to which objects to be conveyed (earth and sand or the like) held by a work machine are dropped is acquired, and a position of a detection target (a cargo bed or the like) in the dropping target appearing in the image is specified based on a position specification model which is a learned model and the captured image.

However, specifying a position of a detection target by image recognition using a learned model lacks accuracy.

### Citation List

### Patent Literature

Patent Literature 1: JP 2020-35380 A
Document EP 2 993 620 A1 discloses a system for determining the position of an offshore structure in a fixed reference frame by observations from a moving reference frame. The system comprises a plurality of markers located at defined positions on the structure and an imaging device, arranged to view the markers and generate image data representative of the relative positions of the markers in the moving reference frame. The imaging device may be mounted aboard a vessel. A local positioning system is arranged to determine a position of the imaging device in the fixed reference frame and generate position data. A processing unit is arranged to receive the image data from the imaging device and the position data from the local positioning system and compute the position of the structure based on the defined positions of the markers.
Document JP 2020 118 586 A discloses a moving vehicle that recognizes the position and attitude of an object equipped with a marker group in which a plurality of markers are arranged by being spaced part by a first prescribed distance.

### Summary of Invention

An object of the present invention is to provide a position detection system capable of accurately detecting a position of a detection target.

The present invention is a position detection system that detects a position of at least one detection target with respect to a work machine, the position detection system including: at least one mark provided on the at least one detection target and allowing a position and an attitude of the at least one mark to be acquired from outside; an imaging device that images the at least one detection target so as to include the at least one mark; an acquisition unit that acquires the position and the attitude of the at least one mark from imaging information that is information related to the at least one mark that has been imaged; a storage device that stores information on a three-dimensional shape of the at least one detection target; and a detection target calculation unit that calculates a position and an attitude of the at least one detection target based on mark related information that is information on the acquired position and attitude of the at least one mark and the stored information on the three-dimensional shape of the at least one detection target, wherein the at least one mark includes a plurality of marks, the position detection system further comprising a specific part calculation unit configured to calculate, as the mark related information, a position and an attitude of a specific part associated with the at least one detection target from data of the plurality of marks acquired by the acquisition unit, wherein the detection target calculation unit is configured to calculate the position and the attitude of the at least one detection target based on the calculated position and attitude of the specific part and the stored information on the three-dimensional shape of the at least one detection target, characterized in that the position detection system comprises a measurement device configured to measure a distance to the at least one detection target; and a correction unit configured to correct the position and the attitude of the specific part based on the measured distance.

### Brief Description of Drawings

FIG. 1 is a side view of a position detection system.
FIG. 2 is a perspective view of a dump truck as viewed from a work machine side.
FIG. 3 is a block diagram of the position detection system.
FIG. 4 is a flowchart of position detection processing.

### Description of Embodiment

In the following, a preferred embodiment of the present invention will be described with reference to the drawings.

### (Configuration of Position Detection System)

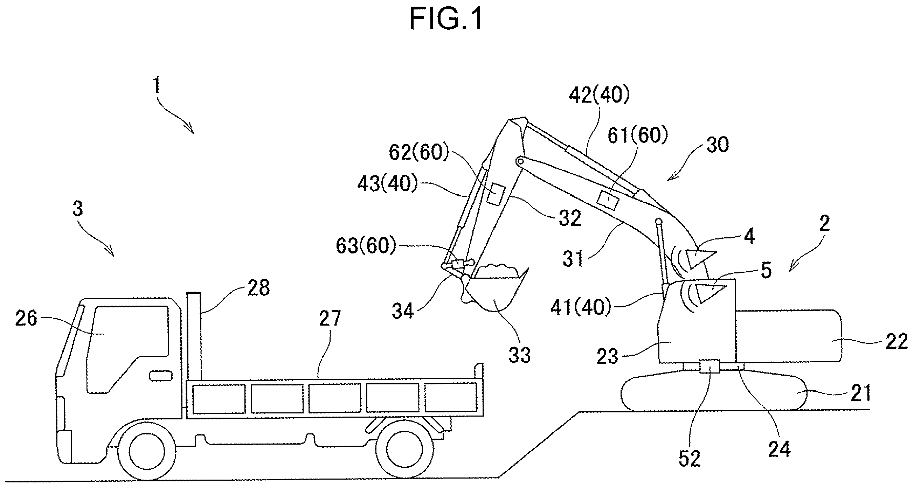

A position detection system according to the present embodiment detects a position of a detection target with respect to a work machine. As illustrated in FIG. 1 which is a side view of a position detection system 1, the position detection system 1 includes a work machine 2, a dump truck 3, an imaging device 4, and a measurement device 5.

### (Configuration of Work Machine)

As illustrated in FIG. 1, the work machine 2 is a machine that performs work with an attachment 30, and is, for example, a hydraulic excavator. The work machine 2 includes a lower travelling body 21, an upper slewing body 22, a slewing device 24, the attachment 30, and a plurality of cylinders 40.

The lower travelling body 21 is a part that causes the work machine 2 to travel, and includes, for example, a crawler. The upper slewing body 22 is turnably attached to an upper portion of the lower travelling body 21. A cab (driver's room) 23 is provided at a front portion of the upper slewing body 22. The slewing device 24 can slew the upper slewing body 22 with respect to the lower travelling body 21.

The attachment 30 is attached to the upper slewing body 22 so as to be vertically turnable. The attachment 30 includes a boom 31, an arm 32, and a bucket 33. The boom 31 is attached to the upper slewing body 22 so as to be vertically turnable. The arm 32 is attached to the boom 31 so as to be vertically turnable. The bucket 33 is attached to the arm 32 so as to be vertically turnable.

The bucket 33 is a part that excavates, holds, and drops earth and sand which are objects to be conveyed. Note that the bucket 33 is an example of a distal end attachment attached to the arm 32. The distal end attachment is not limited thereto, and may be a nibbler, a clamp arm, or the like. In addition, the objects to be conveyed are not limited to earth and sand, and may be rubble, scrap iron, gravel, or the like.

The plurality of cylinders 40 can hydraulically turn the attachment 30. Each of the plurality of cylinders 40 is a hydraulic telescopic cylinder. The plurality of cylinders 40 includes a boom cylinder 41, an arm cylinder 42, and a bucket cylinder 43.

The boom cylinder 41 rotationally drives the boom 31 with respect to the upper slewing body 22. The boom cylinder 41 has a proximal end turnalby attached to the upper slewing body 22. The boom cylinder 41 has a distal end turnalby attached to the boom 31.

The arm cylinder 42 rotationally drives the arm 32 with respect to the boom 31. The arm cylinder 42 has a proximal end turnalby attached to the boom 31. The arm cylinder 42 has a distal end turnalby attached to the arm 32.

The bucket cylinder 43 rotationally drives the bucket 33 with respect to the arm 32. The bucket cylinder 43 has a proximal end turnalby attached to the arm 32. The bucket cylinder 43 has a distal end portion turnalby attached to a link member 34 turnalby attached to the bucket 33.

The work machine 2 further includes an angle sensor 52, and at least one inclination angle sensor 60.

The angle sensor 52 detects a slewing angle of the upper slewing body 22 with respect to the lower travelling body 21. The angle sensor 52 may be, for example, an encoder, a resolver, or a gyro sensor. In the present embodiment, the slewing angle of the upper slewing body 22 when a front of the upper slewing body 22 agrees with a front of the lower travelling body 21 is set to 0°. A detection signal for a slewing angle detected by the angle sensor 52 is input to a controller 11.

The at least one inclination angle sensor 60 detects an attitude of the attachment 30. The at least one inclination angle sensor 60 includes a boom inclination angle sensor 61, an arm inclination angle sensor 62, and a bucket inclination angle sensor 63. Detection signals for inclination angles detected by the inclination angle sensors 61, 62, and 63 are input to the controller 11.

The boom inclination angle sensor 61 is attached to the boom 31 and detects an attitude of the boom 31. The boom inclination angle sensor 61 is a sensor that acquires an inclination angle of the boom 31 with respect to a horizontal line or the upper slewing body 22, and may, for example, an inclination sensor (acceleration sensor). Note that the boom inclination angle sensor 61 may be a rotation angle sensor that detects a rotation angle of a boom foot pin (boom proximal end) or a stroke sensor that detects a stroke amount of the boom cylinder 41.

The arm inclination angle sensor 62 is attached to the arm 32 to detect an attitude of the arm 32. The arm inclination angle sensor 62 is a sensor that acquires an inclination angle of the arm 32 with respect to the horizontal line or the boom 31, and may be, for example, an inclination sensor (acceleration sensor). Note that the arm inclination angle sensor 62 may be a rotation angle sensor that detects a rotation angle of an arm connection pin (boom proximal end) or a stroke sensor that detects a stroke amount of the arm cylinder 42.

The bucket inclination angle sensor 63 is attached to the link member 34 to detect an attitude of the bucket 33. The bucket inclination angle sensor 63 is a sensor that acquires an inclination angle of the bucket 33 with respect to the horizontal line or the arm 32, and may be, for example, an inclination sensor (acceleration sensor). Note that the bucket inclination angle sensor 63 may be a rotation angle sensor that detects a rotation angle of a bucket connection pin (bucket proximal end) or a stroke sensor that detects a stroke amount of the bucket cylinder 43.

### (Configuration of Dump Truck)

As illustrated in FIG. 1, earth and sand held by the work machine 2 are dropped to the dump truck 3. The dump truck 3 includes a driver's room 26 and a cargo bed 27. The cargo bed 27 is a part to which earth and sand are dropped, and is a detection target in the present embodiment. The cargo bed 27 has four side walls surrounding its periphery. Among the four side walls, a front wall which is a side wall positioned on the innermost side as viewed from the work machine 2 disposed behind the cargo bed 27 has a back face 28 which is a surface facing the work machine 2. In the present embodiment, a plurality of types of dump trucks 3 goes in and out of a work site. The cargo bed 27 of each of the dump trucks 3 of the plurality of types is an example of a plurality of detection targets. The detection target is not limited to the cargo bed 27, and may be, for example, an earth and sand pit or the like.

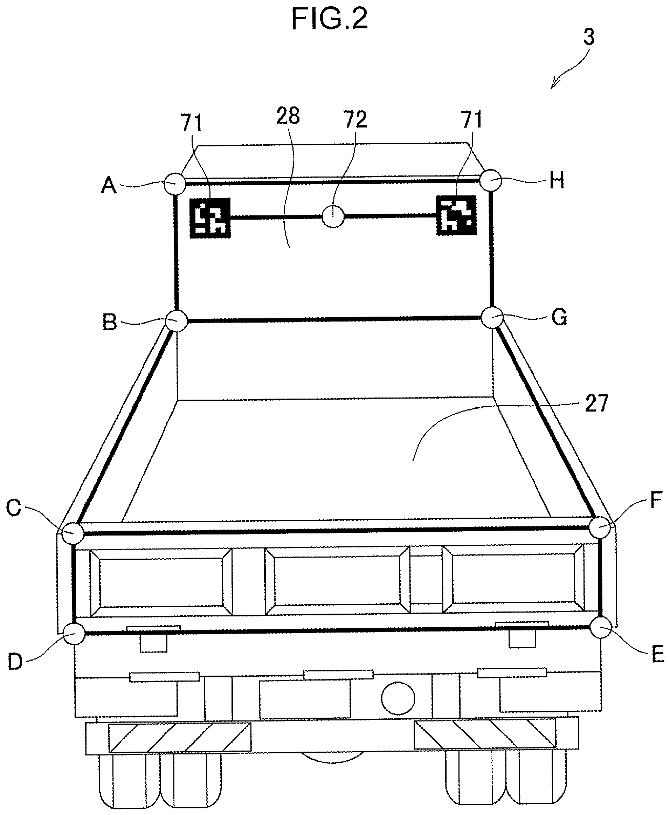

As illustrated in FIG. 2 which is a perspective view of the dump truck 3 viewed from the work machine 2 side, two marks 71, 71 are provided on the back face 28. The two marks 71, 71 are disposed at a predetermined interval. Each of the two marks 71, 71 allows its position and attitude to be acquired from the outside, and is an AR marker in the present embodiment. At least one of the two marks 71, 71 is different for each type of the cargo bed 27 of the dump truck 3. The number of marks 71 may be three or more, or may be one.

### (Configuration of Imaging Device)

As illustrated in FIG. 1, the imaging device 4 is attached to the work machine 2. Note that the imaging device 4 may be installed at a place away from the work machine 2. The imaging device 4 may be, for example, a digital camera. The imaging device 4 images the cargo bed 27 of the dump truck 3 such that the marks 71, 71 illustrated in FIG. 2 are included in an imaging range. Imaging information (e.g., image data) that is information on the marks 71, 71 imaged by the imaging device 4 is input to the controller 11.

### (Configuration of Measurement Device)

As illustrated in FIG. 1, the measurement device 5 is attached to the work machine 2. Note that the measurement device 5 may be installed at a place away from the work machine 2. The measurement device 5 may be, for example, LIDAR (Light Detection and Ranging or Laser Imaging Detection and Ranging). The LIDAR measures a distance to the cargo bed 27 of the dump truck 3 by acquiring three-dimensional point group data. Note that the measurement device 5 may be an ultrasonic sensor, a millimeter wave radar, a stereo camera, a distance image sensor, an infrared sensor, or the like. Information on the distance to the cargo bed 27 measured by the measurement device 5 is input to the controller 11.

### (Configuration of Position Detection System)

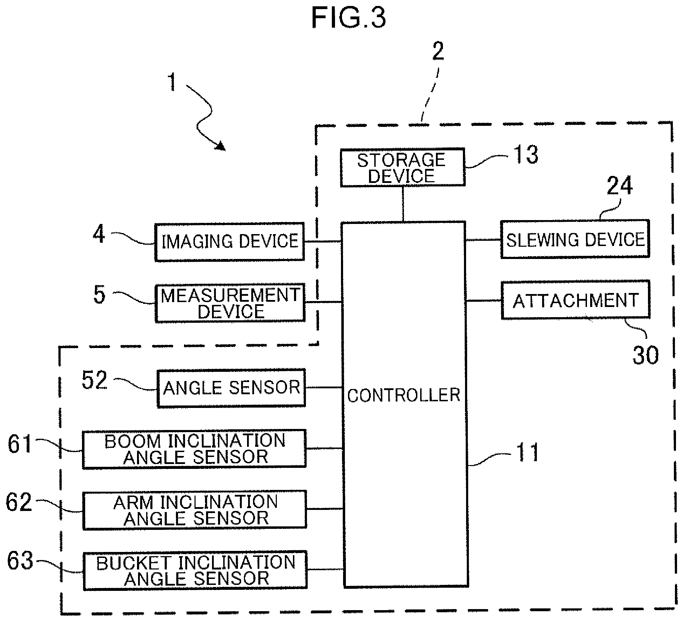

As shown in FIG. 3, which is a block diagram of the position detection system 1, the work machine 2 includes the controller 11 and a storage device 13.

The controller 11 includes an arithmetic processing unit such as a CPU. The controller 11 includes an acquisition unit, a detection target calculation unit, a specific part calculation unit, an estimation unit, a correction unit, and a specifying unit. Each of the acquisition unit, the detection target calculation unit, the specific part calculation unit, the estimation unit, the correction unit, and the specifying unit is realized by the arithmetic processing unit executing a control program.

The controller 11 is configured to automatically operate the slewing device 24 and the attachment 30 based on detection values of the angle sensor 52 and the plurality of inclination angle sensors 60 (the boom inclination angle sensor 61, the arm inclination angle sensor 62, and the bucket inclination angle sensor 63). In other words, the work machine 2 is automatically operated. Note that the controller 11 may be configured to control operations of the slewing device 24 and the attachment 30 so that assist operation for assisting an operator who operates the work machine 2 is performed.

The storage device 13 stores information on a three-dimensional shape of the cargo bed 27 of at least one dump truck 3. As described above, the plurality of types of dump trucks 3 goes in and out of the work site. Therefore, the storage device 13 stores information on a three-dimensional shape of each cargo bed 27 of the plurality of types of dump trucks 3.

Specifically, for example, the storage device 13 stores information on a three-dimensional shape of a first cargo bed 27 (a first detection target) which is a cargo bed of a first dump truck 3, information on a three-dimensional shape of a second cargo bed 27 (a second detection target) which is a cargo bed of a second dump truck 3, and information on a three-dimensional shape of a third cargo bed 27 (a third detection target) which is a cargo bed of a third dump truck 3. The first cargo bed 27, the second cargo bed 27, and the third cargo bed 27 are different types of cargo beds. The first cargo bed 27, the second cargo bed 27, and the third cargo bed 27 are different from each other in at least one of shape and size. Note that the storage device 13 may store information on three-dimensional shapes of four or more different types of cargo beds, or may store only information on a three-dimensional shape of one cargo bed 27, or may store only information on three-dimensional shapes of two cargo beds 27.

In the present embodiment, the information on a three-dimensional shape represents coordinates of a plurality of key points, which are a plurality of points set in advance at positions spaced apart from each other on the cargo bed 27, and specifically, represents coordinates of eight key points A to H indicated by reference numerals A to H in FIG. 2.

The specifying unit of the controller 11 specifies a type of the dump truck 3 from imaging information related to the marks 71, 71 imaged by the imaging device 4. In other words, the specifying unit of the controller 11 specifies a type of the cargo bed 27 from the imaging information. In the present embodiment, the specifying unit of the controller 11 specifies whether the cargo bed 27 to which the marks 71, 71 imaged by the imaging device 4 are attached is the first cargo bed 27, the second cargo bed 27, or the third cargo bed 27 based on the imaging information. Identification information for specifying a type of the cargo bed 27 is written on at least one of the marks 71, 71 attached to each cargo bed 27.

The acquisition unit of the controller 11 acquires positions and attitudes of the marks 71, 71 as marker information from the imaging information related to the marks 71, 71 imaged by imaging device 4. Here, each of the marks 71, 71 is registered in the controller 11 in advance as the AR marker. The AR marker is a sign on which identification information enabling the acquisition unit to acquire a position and an attitude of the AR marker is written. In addition, the AR marker is preferably a sign on which identification information enabling the specifying unit to specify a type of the cargo bed 27 (a type of a detection target) is written. Further, the AR marker may be a sign on which an image to be superimposed and displayed on an image of a real space in an augmented reality (AR) system and identification information for designating a position of the image are written. In the present embodiment, the mark 71 has identification information written for designating an image indicating a three-dimensional coordinate system of the mark 71. The acquisition unit of the controller 11 acquires the attitude of the mark 71 by acquiring a three-dimensional coordinate system of the mark 71. Specifically, from the imaging information related to the marks 71, 71 imaged by the imaging device 4, the acquisition unit of the controller 11 can acquire the three-dimensional coordinate system of each of the marks 71, 71, i.e., the attitude (e.g. roll, pitch, and yaw) of each of the marks 71, 71.

The specific part calculation unit of the controller 11 calculates, as midpoint information, a position and an attitude of a midpoint 72 from data of the two marks 71, 71 acquired by the acquisition unit, i.e., the positions and the attitudes of the two marks 71, 71. Here, as illustrated in FIG. 2, the midpoint 72 (midpoint part 72) is a specific part associated with the cargo bed 27. Specifically, the midpoint 72 is a midpoint of a straight line (line segment) connecting the two marks 71, 71. More specifically, the midpoint 72 is a midpoint of a straight line (line segment) connecting a center point of one mark 71 and a center point of the other mark 71. The specific part calculation unit can calculate, for example, an average value of coordinates of the center point of the one mark 71 and coordinates of the center point of the other mark 71 as the position of the midpoint 72 (the coordinates of the midpoint 72). For example, the specific part calculation unit can calculate an attitude of the midpoint 72 from the attitude of the one mark 71 and the attitude of the other mark 71. When the attitudes of the marks 71, 71 are expressed by the three-dimensional coordinate systems of the marks 71, 71, respective, as described above, the specific part calculation unit can obtain a three-dimensional coordinate system of the midpoint 72, i.e., an attitude of the midpoint 72 from, for example, the three-dimensional coordinate system of the one mark 71 and the three-dimensional coordinate system of the other mark 71. For example, the specific part calculation unit can calculate a value obtained by linearly interpolating the attitude of the one mark 71 (the three-dimensional coordinate system of the one mark 71) and the attitude of the other mark 71 (the three-dimensional coordinate system of the other mark 71) as the attitude of the midpoint 72. The specific part is not limited to the midpoint 72. The midpoint information in the present embodiment is an example of mark related information.

Note that the controller 11 may perform spatial filtering on the calculated midpoint information by weighted averages. As a result, noise can be reduced or edge can be emphasized.

The detection target calculation unit of the controller 11 calculates a position and an attitude of the cargo bed 27 based on the midpoint information calculated by the specific part calculation unit and the information on the three-dimensional shape of the cargo bed 27 stored in the storage device 13. In other words, the detection target calculation unit specifies where each of the eight key points A to H is located in the space from the position and the attitude of the midpoint 72. Specifically, a relative position of each key point with respect to the midpoint 72 is defined in advance, and the detection target calculation unit can calculate three-dimensional coordinates of each key point on the basis of the coordinates (x, y, z) and the attitude (roll, pitch, and yaw) of the midpoint 72. The three-dimensional coordinates of the eight key points A to H indicate the position and the attitude of the cargo bed 27. Here, information on the three-dimensional shape of the cargo bed 27 corresponding to a type specified from among the plurality of types is used to calculate a position and an attitude of the cargo bed 27.

In a case where the number of the marks 71 provided on the back face 28 is one, the position and the attitude of the cargo bed 27 are calculated based on the marker information of the mark 71 and the stored information on the three-dimensional shape of the cargo bed 27. In a case, however, where the number of the marks 71 is one, the calculated position and attitude of the cargo bed 27 may vary due to variation in the acquired attitude (three-dimensional coordinate system) of the mark 71. Therefore, it is preferable to calculate a position and an attitude of the cargo bed 27 by calculating the midpoint information from two or more marks 71.

In this manner, the position and the attitude of the cargo bed 27 are calculated based on the position and the attitude of the at least one mark 71 acquired from the imaging information (e.g., image data) related to the imaged mark 71 and the information on the three-dimensional shape of the cargo bed 27 stored in the storage device 13. As a result, the position of the cargo bed 27 of the dump truck 3 can be accurately detected. Therefore, it is possible to perform, with high accuracy, assistance to an operator who operates the work machine 2 so as to drop earth and sand to the cargo bed 27, automatic operation of the work machine 2 operating so as to drop earth and sand to the cargo bed 27, and the like.

In the present embodiment, the plurality of marks 71 is provided on the cargo bed 27, and the position and the attitude of the midpoint 72 are calculated from the acquired positions and attitudes of the plurality of marks 71. Then, the position and the attitude of the cargo bed 27 are calculated based on the calculated position and attitude of the midpoint 72 and the stored information on the three-dimensional shape of the cargo bed 27. In a case of calculating a position and an attitude of the cargo bed 27 by using a position and an attitude of one marks 71, the calculated position and attitude of the cargo bed 27 may vary due to variation in the acquired attitude of the mark 71. Therefore, by calculating a position and an attitude of the midpoint 72 from the positions of the plurality of marks 71 and calculating a position and an attitude of the cargo bed 27 using the position and the attitude of the midpoint 72, it is possible to improve the accuracy of detecting a position of the cargo bed 27 of the dump truck 3.

The specifying unit of the controller 11 specifies a type of the cargo bed 27 from the imaging information related to the imaged mark 71. Then, the detection target calculation unit of the controller 11 calculates a position and an attitude of the cargo bed 27 based on the midpoint information as the mark related information and the information on a three-dimensional shape of the cargo bed 27 corresponding to the specified type. This enables a position of the cargo bed 27 of the dump truck 3 to be accurately detected even when a plurality of types of dump trucks 3 goes in and out of the work site.

Here, in a case where the acquisition unit fails to acquire data of one mark 71 (e.g., a position of one mark 71) of two marks, 71, 71, the estimation unit of the controller 11 estimates a position and an attitude of the midpoint 72 as the midpoint information from a position and an attitude of the other mark 71 which are acquired by the acquisition unit. Specifically, for example, in a case where the acquisition unit fails to acquire data of one mark 71 (e.g., a position of one mark 71) of the two marks 71, 71 and acquires data of the other mark 71 (e.g., a position and an attitude of the other mark 71), the estimation unit adds a distance from the acquired mark 71 to the midpoint 72 to the acquired position of the mark 71 to calculate a position of the midpoint 72, thereby deciding the attitude of the acquired mark 71 as the attitude of the midpoint 72. The distance from the mark 71 to the midpoint 72 may be stored in advance in the storage device 13 for each type of the cargo bed 27. Then, the detection target calculation unit of the controller 11 calculates a position and an attitude of the cargo bed 27 based on the estimated midpoint information and the stored information on the three-dimensional shape of the cargo bed 27. The estimated position and attitude of the midpoint 72 (estimated midpoint information) represent an example of the mark related information.

Thus, when a part of the positions of the plurality of marks 71 could not be acquired, robustness can be improved by estimating a position and an attitude of the midpoint 72.

Note that the controller 11 may perform spatial filtering on the estimated midpoint information by weighted averages. As a result, noise can be reduced or edge can be emphasized.

The correction unit of the controller 11 corrects the position and the attitude of the midpoint 72 based on the distance measured by the measurement device 5. Specifically, the correction unit detects the back face 28 of the cargo bed 27 from point group data acquired by the measurement device 5, and corrects the position and the attitude of the midpoint 72 based on information on the back face 28. Specifically, the correction unit calculates a pitch value and a yaw value based on a normal vector of the detected back face 28. In addition, since the midpoint 72 exists on the back face 28, the correction unit uses coordinates of a point closest to the midpoint 72 among points on the back face 28 as coordinates of the corrected midpoint 72. This enables detection accuracy of a position of the cargo bed 27 of the dump truck 3 to be further improved.

Note that the controller 11 calibrates a relative relationship between visual fields of the imaging device 4 and the measurement device 5. In other words, a coordinate system of the imaging device 4 and a coordinate system of the measurement device 5 are matched. As a result, a position and an attitude of the midpoint 72 can be accurately corrected.

### (Operation of Position Detection System)

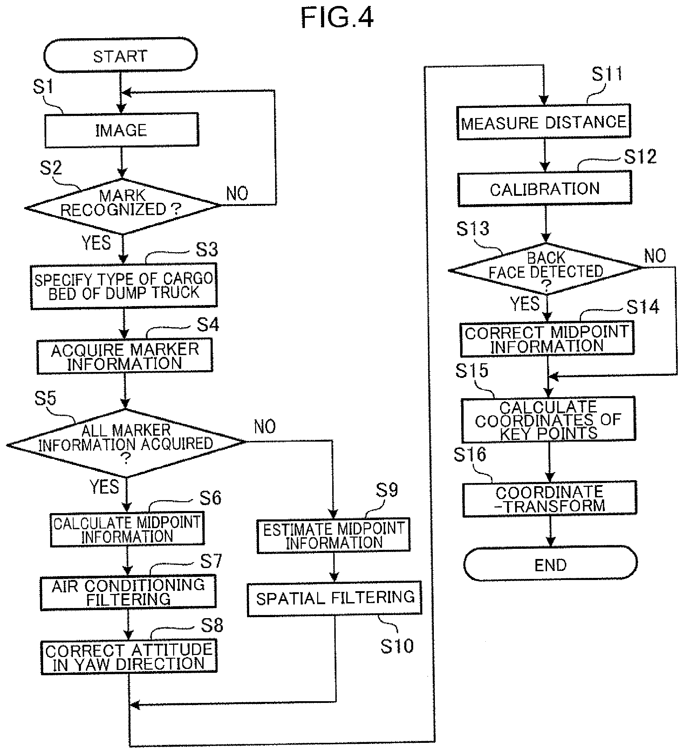

Next, operation of the position detection system 1 will be described with reference to FIG. 4 which is a flowchart of position detection processing.

First, the controller 11 of the work machine 2 causes the imaging device 4 to image the cargo bed 27 of the dump truck 3 (step S1). At this time, the cargo bed 27 is imaged such that the mark 71 is included in an imaging range (in the image data). In a case where the imaging device 4 is attached to the work machine 2, disposing the work machine 2 behind the cargo bed 27 enables the imaging device 4 to image the cargo bed 27 such that the mark 71 is included in the imaging range. Next, the controller 11 determines whether the mark 71 has been recognized or not (step S2). When the controller 11 determines in step S2 that the mark 71 has not been recognized (step S2: NO), the processing returns to step S1.

On the other hand, when the controller 11 determines in step S2 that the mark 71 has been recognized (step S2: YES), the controller 11 specifies a type of the cargo bed 27 of the dump truck 3 from the imaging information (image data) related to the mark 71 (step S3). The controller 11 then acquires the marker information (the position and the attitude of the mark 71) from the imaging information related to the mark 71 (step S4).

Next, the controller 11 determines whether all the marker information has been acquired or not (step S5). Specifically, the controller 11 determines whether or not the marker information of each of the two marks 71 is acquired from the imaging information. In a case where the controller 11 determines in step S5 that all the marker information has been acquired (step S5: YES), the controller 11 calculates midpoint information (a position and an attitude of the midpoint 72) from the positions and the attitudes of marks 71 (step S6).

Next, the controller 11 performs spatial filtering on the calculated midpoint information (step S7). Then, the controller 11 corrects the attitude of the midpoint 72 in a yaw direction (step S8).

On the other hand, in a case where the controller 11 determines in step S5 that all the marker information has not been acquired (step S5: NO), the controller 11 estimates midpoint information from the acquired marker information (step S9). Then, the controller 11 performs spatial filtering on the estimated midpoint information (step S10).

After step S8 or after step S10, the controller 11 causes the measurement device 5 to measure a distance to the cargo bed 27 (step S11). Then, the controller 11 performs calibration for matching the coordinate system of the imaging device 4 and the coordinate system of the measurement device 5 (step S12).

Next, the controller 11 determines whether or not the back face 28 of the cargo bed 27 has been detected from the three-dimensional point group data acquired by the measurement device 5 (step S13). In step S13, when determining that the back face 28 of the cargo bed 27 has been detected (step S13: YES), the controller 11 corrects the midpoint information (step S14).

When the controller 11 determines in step S13 that the back face 28 of the cargo bed 27 has not been detected (step S13: NO), or after step S14, the controller 11 calculates a position and an attitude of the cargo bed 27 as the coordinates of the eight key points A to H based on the midpoint information and the information on the three-dimensional shape of the cargo bed 27 stored in the storage device 13 (step S15).

Next, the controller 11 coordinate-transforms the respective coordinates of the eight key points A to H into a coordinate system of the work machine 2 (step S16). As a result, the position of the cargo bed 27 of the dump truck 3 is accurately detected. Thereafter, the controller 11 ends this flow.

### (Effects)

As described in the foregoing, the position detection system 1 according to the present embodiment enables calculation of a position and an attitude of the cargo bed 27 based on the marker information (the position and the attitude of the mark 71) acquired from the imaging information related to the imaged mark 71 and the information on the three-dimensional shape of the cargo bed 27 (detection target) stored in the storage device 13. As a result, the position of the cargo bed 27 of the dump truck 3 can be accurately detected. Therefore, it is possible, for example, to perform, with high accuracy, assistance to an operator who operates the work machine 2 so as to drop earth and sand (objects to be conveyed) to the cargo bed 27, automatic operation of the work machine 2 operating so as to drop earth and sand to the cargo bed 27, and the like.

In addition, the plurality of marks 71 is provided on the cargo bed 27, and the midpoint information (the position and the attitude of the midpoint 72) is calculated from the acquired positions and attitudes of the marks 71. Then, the position and the attitude of the cargo bed 27 are calculated based on the calculated midpoint information and the stored information on the three-dimensional shape of the cargo bed 27. In a case of calculating a position and an attitude of the cargo bed 27 by using a position and an attitude of one marks 71, the calculated position and attitude of the cargo bed 27 may vary due to variation in the attitude of the mark 71. Therefore, by calculating the position and the attitude of the midpoint 72 from the positions and the attitudes of the plurality of marks 71 and calculating the position and the attitude of the cargo bed 27 using the position and the attitude of the midpoint 72, it is possible to improve the accuracy of detecting the position of the cargo bed 27 of the dump truck 3.

In addition, when a part of positions of the plurality of marks 71 could not be acquired, a position and an attitude of the midpoint 72 are estimated from the acquired position and attitude of the mark 71. Then, the position and the attitude of the cargo bed 27 are calculated based on the estimated position and attitude of the midpoint 72 and the stored information on the three-dimensional shape of the cargo bed 27. When a part of the positions of the plurality of marks 71 could not be acquired, robustness can be improved by estimating a position and an attitude of the midpoint 72.

In addition, the position and the attitude of the midpoint 72 are corrected based on the measured distance to the cargo bed 27. This enables detection accuracy of a position of the cargo bed 27 of the dump truck 3 to be further improved.

Further, a type of the cargo bed 27 can be specified from the imaging information related to the imaged mark 71. Then, the position and the attitude of the cargo bed 27 are calculated based on the information on the three-dimensional shape of the cargo bed 27 of the specified type. This enables a position of the cargo bed 27 of the dump truck 3 to be accurately detected even when a plurality of types of dump trucks 3 goes in and out of the work site.

Although the embodiment of the present invention has been described in the foregoing, it is merely an example, and the present invention is not particularly limited, and the specific configuration and the like can be modified in design as appropriate. In addition, the actions and effects described in the embodiment of the present invention merely enumerate the most suitable actions and effects resulting from the present invention, and the actions and effects according to the present invention are not limited to those described in the embodiment of the present invention.

For example, specifying a type of the cargo bed 27 of the dump truck 3, acquisition of the marker information, calculation, estimation, and correction of the midpoint information, and calculation of a position and an attitude of the cargo bed 27 of the dump truck 3 may be performed by a server (not illustrated) instead of the controller 11 of the work machine 2.

In addition, one stereo camera may be used as the imaging device 4 and the measurement device 5. In this case, it is not necessary to separately prepare the imaging device 4 and the measurement device 5.

Although in the above embodiment, the mark related information is the midpoint information, it is not limited to such a specific example. The detection target calculation unit may be configured to calculate a position and an attitude of the detection target based on the position and the attitude of at least one mark acquired by the acquisition unit and the information on the three-dimensional shape of the detection target stored in the storage device. In this case, the mark related information represents the position and the attitude of at least one mark acquired by the acquisition unit.

## Claims

1. A position detection system (1) configured to detect a position of at least one detection target (27) with respect to a work machine (2), the position detection system (1) comprising:
at least one mark (71) provided on the at least one detection target (27) and allowing a position and an attitude of the at least one mark (71) to be acquired from outside;
an imaging device (4) configured to image the at least one detection target (27) so as to include the at least one mark (71);
an acquisition unit (11) configured to acquire the position and the attitude of the at least one mark (71) from imaging information that is information related to the at least one mark (71) that has been imaged;
a storage device (13) configured to store information on a three-dimensional shape of the at least one detection target (27); and
a detection target calculation unit (11) configured to calculate a position and an attitude of the at least one detection target (27) based on mark related information that is information on the acquired position and attitude of the at least one mark (71) and the stored information on the three-dimensional shape of the at least one detection target (27), wherein
the at least one mark (71) includes a plurality of marks (71),
the position detection system (1) further comprising a specific part calculation unit (11) configured to calculate, as the mark related information, a position and an attitude of a specific part associated with the at least one detection target (27) from data of the plurality of marks (71) acquired by the acquisition unit (11),
wherein the detection target calculation unit (11) is configured to calculate the position and the attitude of the at least one detection target (27) based on the calculated position and attitude of the specific part and the stored information on the three-dimensional shape of the at least one detection target (27),
**characterized in that** the position detection system (1) comprises:
a measurement device (5) configured to measure a distance to the at least one detection target (27); and
a correction unit (11) configured to correct the position and the attitude of the specific part based on the measured distance.

2. The position detection system (1) according to claim 1, further comprising
an estimation unit (11) configured to estimate the position and the attitude of the specific part as the mark related information from a position and an attitude of a mark (71) acquired by the acquisition unit (11) when the acquisition unit (11) fails to acquire data of a part of the plurality of marks (71),
wherein the detection target calculation unit (11) configured to calculate the position and the attitude of the at least one detection target (27) based on the estimated position and attitude of the specific part and the stored information on the three-dimensional shape of the at least one detection target (27).

3. The position detection system (1) according to claim 1 or 2, wherein
the at least one detection target (27) includes a plurality of detection targets (27) which differ in type, each of the plurality of detection targets being provided with the at least one mark (71) different for each type of the detection target (27), and
the storage device (13) configured to store information on three-dimensional shapes of the plurality of detection targets (27),
the position detection system (1) further comprising a specifying unit (11) configured to specify a type of the detection target (27) from the imaging information, wherein
the detection target calculation unit (11) is configured to calculates the position and the attitude of the at least one detection target (27) based on the mark related information and information on a three-dimensional shape corresponding to the specified type of the detection target (27).

## Patentansprüche

1. Positionserfassungssystem (1), das eingerichtet ist, um eine Position mindestens eines Erfassungsziels (27) in Bezug auf eine Arbeitsmaschine (2) zu erfassen, wobei das Positionserfassungssystem (1) Folgendes umfasst:
mindestens eine Markierung (71), die an dem mindestens einen Erfassungsziel (27) angebracht ist und es ermöglicht, eine Position und eine Lage der mindestens einen Markierung (71) von außen zu ermitteln;
eine Bildgebungsvorrichtung (4), die eingerichtet ist, um das mindestens eine Erfassungsziel (27) so abzubilden, dass die mindestens eine Markierung (71) enthalten ist;
eine Ermittlungseinheit (11), die eingerichtet ist, um die Position und die Lage der mindestens einen Markierung (71) aus Bildgebungsinformationen zu ermitteln, bei denen es sich um Informationen handelt, die sich auf die abgebildete mindestens eine Markierung (71) beziehen;
eine Speichervorrichtung (13), die eingerichtet ist, um Informationen über eine dreidimensionale Form des mindestens einen Erfassungsziels (27) zu speichern; und
eine Erfassungsziel-Berechnungseinheit (11), die eingerichtet ist, um eine Position und eine Lage des mindestens einen Erfassungsziels (27) auf der Grundlage von markierungsbezogenen Informationen, bei denen es sich um Informationen über die ermittelte Position und Lage der mindestens einen Markierung (71) handelt, und von den gespeicherten Informationen über die dreidimensionale Form des mindestens einen Erfassungsziels (27) zu berechnen, wobei
die mindestens eine Markierung (71) eine Vielzahl von Markierungen (71) aufweist,
wobei das Positionserfassungssystem (1) ferner eine spezifische Teilberechnungseinheit (11) umfasst, die eingerichtet ist, um als die markierungsbezogenen Informationen eine Position und eine Lage eines spezifischen Teils, das mit dem mindestens einen Erfassungsziel (27) assoziert ist, aus Daten der Vielzahl von Markierungen (71) zu berechnen, die von der Ermittlungseinheit (11) ermittelt wurden,
wobei die Erfassungsziel-Berechnungseinheit (11) eingerichtet ist, um die Position und die Lage des mindestens einen Erfassungsziels (27) auf der Grundlage der berechneten Position und Lage des spezifischen Teils und der gespeicherten Informationen über die dreidimensionale Form des mindestens einen Erfassungsziels (27) zu berechnen,
**dadurch gekennzeichnet, dass** das Positionserfassungssystem (1) Folgendes umfasst:
eine Messvorrichtung (5), die eingerichtet ist, um einen Abstand zu dem mindestens einen Erfassungsziel (27) zu messen; und
eine Korrektureinheit (11), die eingerichtet ist, um die Position und die Lage des spezifischen Teils auf der Grundlage des gemessenen Abstands zu korrigieren.

2. Positionserfassungssystem (1) gemäß Anspruch 1, das ferner Folgendes umfasst:
eine Schätzeinheit (11), die eingerichtet ist, um die Position und die Lage des spezifischen Teils als die markierungsbezogenen Informationen aus einer Position und einer Lage einer Markierung (71) zu schätzen, die von der Ermittlungseinheit (11) ermittelt wurden, wenn die Ermittlungseinheit (11) keine Daten eines Teils der Vielzahl von Markierungen (71) erfassen kann,
wobei die Erfassungsziel-Berechnungseinheit (11) eingerichtet ist, um die Position und die Lage des mindestens einen Erfassungsziels (27) auf der Grundlage der geschätzten Position und Lage des spezifischen Teils und der gespeicherten Informationen über die dreidimensionale Form des mindestens einen Erfassungsziels (27) zu berechnen.

3. Positionserfassungssystem (1) gemäß Anspruch 1 oder 2, wobei
das mindestens eine Erfassungsziel (27) eine Vielzahl von Erfassungszielen (27) aufweist, die sich in ihrer Art unterscheiden, wobei jedes der Vielzahl von Erfassungszielen mit mindestens einer Markierung (71) versehen ist, die für jede Art des Erfassungsziels (27) unterschiedlich ist, und
die Speichervorrichtung (13) eingerichtet ist, um Informationen über dreidimensionale Formen der Vielzahl von Erfassungszielen (27) zu speichern,
wobei das Positionserfassungssystem (1) ferner eine Spezifizierungseinheit (11) umfasst, die eingerichtet ist, um einen Typ des Erfassungsziels (27) aus den Bildgebungsinformationen zu spezifizieren, wobei
die Erfassungsziel-Berechnungseinheit (11) eingerichtet ist, um die Position und die Lage des mindestens einen Erfassungsziels (27) auf der Grundlage der markierungsbezogenen Informationen und der Informationen über eine dreidimensionale Form zu berechnen, die dem spezifizierten Typ des Erfassungsziels (27) entspricht.

## Revendications

1. Système de détection de position (1) configuré pour détecter une position d'au moins une cible de détection (27) par rapport à une machine de travail (2), le système de détection de position (1) comprenant :
au moins une marque (71) prévue sur l'au moins une cible de détection (27) et permettant d'acquérir une position et une attitude de l'au moins une marque (71) depuis l'extérieur ;
un dispositif d'imagerie (4) configuré pour former une image de l'au moins une cible de détection (27) de manière à inclure l'au moins une marque (71) ;
une unité d'acquisition (11) configurée pour acquérir la position et l'attitude de l'au moins une marque (71) à partir d'informations d'imagerie qui sont des informations relatives à l'au moins une marque (71) qui a été imagée ;
un dispositif de stockage (13) configuré pour stocker des informations sur une forme tridimensionnelle de l'au moins une cible de détection (27) ; et
une unité de calcul de cible de détection (11) configurée pour calculer une position et une attitude de l'au moins une cible de détection (27) sur la base d'informations relatives aux marques, qui sont des informations sur la position et l'attitude acquises de l'au moins une marque (71) et les informations stockées sur la forme tridimensionnelle de l'au moins une cible de détection (27), dans lequel
l'au moins une marque (71) comporte une pluralité de marques (71),
le système de détection de position (1) comprenant en outre une unité de calcul de partie spécifique (11) configurée pour calculer, en tant que les informations relatives aux marques, une position et une attitude d'une partie spécifique associée à l'au moins une cible de détection (27) à partir de données de la pluralité de marques (71) acquises par l'unité d'acquisition (11),
dans lequel l'unité de calcul de cible de détection (11) est configurée pour calculer la position et l'attitude de l'au moins une cible de détection (27) sur la base de la position et de l'attitude calculées de la partie spécifique et des informations stockées sur la forme tridimensionnelle de l'au moins une cible de détection (27),
**caractérisé en ce que** le système de détection de position (1) comprend :
un dispositif de mesure (5) configuré pour mesurer une distance jusqu'à l'au moins une cible de détection (27) ; et
une unité de correction (11) configurée pour corriger la position et l'attitude de la partie spécifique sur la base de la distance mesurée.

2. Système de détection de position (1) selon la revendication 1, comprenant en outre
une unité d'estimation (11) configurée pour estimer la position et l'attitude de la partie spécifique en tant que les informations relatives aux marques à partir d'une position et d'une attitude d'une marque (71) acquises par l'unité d'acquisition (11) lorsque l'unité d'acquisition (11) ne parvient pas à acquérir des données d'une partie de la pluralité de marques (71),
dans lequel l'unité de calcul de cible de détection (11) est configurée pour calculer la position et l'attitude de l'au moins une cible de détection (27) sur la base de la position et de l'attitude estimées de la partie spécifique et des informations stockées sur la forme tridimensionnelle de l'au moins une cible de détection (27).

3. Système de détection de position (1) selon la revendication 1 ou 2, dans lequel
l'au moins une cible de détection (27) comporte une pluralité de cibles de détection (27) qui diffèrent par leur type, chacune de la pluralité de cibles de détection étant pourvue de l'au moins une marque (71) différente pour chaque type de cible de détection (27), et
le dispositif de stockage (13) est configuré pour stocker des informations sur les formes tridimensionnelles de la pluralité de cibles de détection (27),
le système de détection de position (1) comprenant en outre une unité de spécification (11) configurée pour spécifier un type de cible de détection (27) à partir des informations d'imagerie, dans lequel
l'unité de calcul de cible de détection (11) est configurée pour calculer la position et l'attitude de l'au moins une cible de détection (27) sur la base des informations relatives aux marques et des informations sur une forme tridimensionnelle correspondant au type spécifié de la cible de détection (27).
